# EUROPÄISCHE PATENTSCHRIFT

(11) **EP 3 423 744 B1**
(45) Veröffentlichungstag und Bekanntmachung des Hinweises auf die Patenterteilung: **29.04.2020**
(21) Anmeldenummer: 17708755.8
(22) Anmeldetag: 02.03.2017
(51) Int. Cl.: F16L 23/04, F16L 23/08, F16L 23/00

(54) **VORPOSITIONIERER FÜR EINE PROFILSCHELLE UND VERBINDUNGSANORDNUNG MIT EINEM DERARTIGEN VORPOSITIONIERER**
PRE-POSITIONER FOR A PROFILED CLAMP AND CONNECTING ARRANGEMENT HAVING SUCH A PRE-POSITIONER
DISPOSITIF DE PRÉ-POSITIONNEMENT POUR UNE BRIDE PROFILÉE ET ENSEMBLE DE LIAISON DOTÉ D'UN DISPOSITIF DE PRÉ-POSITIONNEMENT DE CE TYPE

(30) Priorität: 04.03.2016 DE 102016103986
(43) Veröffentlichungstag der Anmeldung: 09.01.2019
(73) Patentinhaber: NORMA Germany GmbH, 63277 Maintal (DE)
(72) Erfinder: PAES, Stephen, Fleet Hampshire GU52 6BQ (GB); BAUDOIN, Manuel, Newbury Berkshire RG14 7QD (GB); KAYACIK, Erkan, 34841 Maltepe Istanbul (TR); COTTLE, Ben, Newbury Berkshire RG14 6RU (GB)
(74) Vertreter: Patentanwälte Olbricht Buchhold Keulertz
(86) Internationale Anmeldenummer: PCT/EP2017/054975
(87) Internationale Veröffentlichungsnummer: WO 2017/149104

(56) Entgegenhaltungen:
- EP-A2- 1 840 439
- EP-A2- 2 292 964
- DE-A1-102011 101 506
- DE-U1-202013 001 224
- US-A- 2 413 402

## Beschreibung

Die Erfindung betrifft einen Vorpositionierer für eine Profilschelle gemäß dem Oberbegriff von Anspruch 1 sowie eine Verbindungsanordnung mit einem derartigen Vorpositionierer.

Profilschellen werden in der Regel zum Verbinden von zwei Leitungen verwendet, die an ihren Leitungsenden Verbindungsflansche aufweisen. Die Profilschelle umgreift dabei üblicherweise die beiden Verbindungsflansche an ihren voneinander abgewandten Stirnseiten und drückt beim Spannen die Verbindungsflansche axial aneinander. Die Profilschelle hat dafür in der Regel ein im Wesentlichen V-förmiges Profil. Beim Spannen der Profilschelle wird also nicht nur eine radiale Kraft auf die Verbindungsflansche ausgeübt, sondern auch eine axial gerichtete Kraft, die die Leitungsenden zusammendrückt.

Ein Montieren der bekannten Profilschellen ist jedoch in vielen Anwendungsbereichen relativ schwierig. Insbesondere bei beengten räumlichen Verhältnissen kann es für den Monteur problematisch sein, einerseits die Verbindungsflansche zusammenzudrücken und andererseits die Profilschelle in Position zu bringen und zu spannen. Häufig ist dabei die Position der gewünschten Leitungsverbindung auch nur von einer Seite zugänglich.

Durch einen Vorpositionierer lässt sich die Profilschelle nun an der gewünschten Position am Leitungsende anordnen und kann zu einem späteren Zeitpunkt gespannt werden. Dabei ist es bekannt, den Vorpositionierer aus zwei Elementen zusammen zu setzen, von denen das eine Element in Form eines Stiftes am Leitungsende und das andere Element in Form einer Lasche mit einer axialen Führungsnut für den Stift am Schellenband der Profilschelle festgelegt wird. Eine Bewegung in radialer Richtung, die beim Spannen der Profilschelle auftritt, wird dabei durch die Materialelastizität der Lasche ermöglicht. Zum Einführen des Stifts in die Führungsnut ist eine Bewegung der Profilschelle in axialer Richtung erforderlich, die durch den Verbindungsflansch häufig erschwert wird. Die Montage ist dadurch relativ aufwendig.

Dokument EP 1 840 439 A2 offenbart einen zweiteiligen Vorpositionierer gemäß dem Oberbegriff von Anspruch 1.

Dokument US 2,413,402 A1 offenbart einen bajonettartigen Verriegelungsmechanismus einer Rohrkupplung.

Der Erfindung liegt nun die Aufgabe zu Grunde, einen Vorpositionier bereit zu stellen, der eine einfache Montage erlaubt.

Gelöst wird diese Aufgabe durch einen Vorpositionierer mit den Merkmalen des Anspruchs 1 bzw. durch eine Verbindungsanordnung mit den Merkmalen des Anspruchs 13. Vorteilhafte Ausgestaltungen sind Gegenstand der Unteransprüche.

Bei einem Vorpositionierer für eine Profilschelle, der zweiteilig mit einem ersten Element und einem zweiten Element ausgebildet ist, wobei das erste Element an einem Leitungsende und das zweite Element an der Profilschelle befestigbar ist, ist erfindungsgemäß vorgesehen, dass das erste Element bügelförmig mit einem am Leitungsende festlegbaren Fußabschnitt und einem gegenüber dem Fußabschnitt radial nach außen versetzten Halteabschnitt ausgebildet ist, der eine Ausnehmung aufweist, wobei das zweite Element einen Stift aufweist, der in Umfangsrichtung oder in Radialrichtung in die Ausnehmung einführbar ist.

Die beiden Elemente können mit Hilfe dieser Ausgestaltung durch eine Relativbewegung in Umfangsrichtung oder Radialrichtung, gegebenenfalls in Verbindung mit einer Schwenkbewegung, miteinander in Eingriff gebracht werden, wobei eine Begrenzung der axialen Bewegungsfreiheit durch das Zusammenwirken des Stifts mit den Rändern der Ausnehmung erfolgt. Damit ist eine Vorpositionierung der Profilschelle mit dem neuen Vorpositionierer mit geringem Aufwand möglich.

Dabei ist besonders bevorzugt, dass das zweite Element mit dem in der Nut befindlichen Führungsstift gegenüber dem ersten Element radial bewegbar ist. Die beim Spannen der Profilschelle auftretende radiale Verschiebung zwischen den Elementen des Vorpositionierers wird dadurch nicht behindert. Vielmehr kann der Führungsstift in Radialrichtung mehr oder weniger weit in die Nut eintauchen, wobei ein dafür erforderlicher Bewegungsraum durch die radiale Beabstandung des Halteabschnitts des ersten Elements, in dem die Nut ausgebildet ist, bereitgestellt wird.

In einer bevorzugten Ausgestaltung ist vorgesehen, dass die Ausnehmung als in Umfangsrichtung verlaufende, insbesondere einseitig offene Nut ausgebildet ist. Eine Bewegung der Profilschelle in Umfangsrichtung während der Montage ist auch bei bereits auf den Verbindungsflanschen angeordneter Profilschelle problemlos möglich. Es ergibt sich so eine einfache Montage.

Vorzugsweise ist der Stift als Führungsstift ausgebildet, der in Umfangsrichtung in die Nut einführbar ist. Die Profilschelle kann so auf einem Flansch vorpositioniert werden und anschließend der Stift durch Rotation der Profilschelle gegenüber dem Flansch in die Nut eingebracht werden. Die dann eingenommene Position wird anschließend durch den Stift in der Nut zumindest in Axialrichtung gesichert.

In einer bevorzugten Weiterbildung weist der Führungsstift an seinem radial inneren Ende eine Verbreiterung auf, die breiter als die Nut ist, wobei die Verbreiterung zwischen den Halteabschnitt und dem Leitungsende einführbar ist. Durch diese Verbreiterung wird eine Relativbewegung in Radialrichtung begrenzt, da sie ein Herausziehen des Führungsstifts in Radialrichtung verhindert. Ein weiteres Eintauchen des Führungsstiftes, wie es beim Spannen der Profilschelle erforderlich ist, ist hingegen weiterhin möglich. An seinem radial äußeren Ende ist der Führungsstift dann mit dem zweiten Element verbunden.

In einer bevorzugten Ausgestaltung ist die Ausnehmung als Öffnung mit geschlossenem Umfangsrand ausgebildet. Durch den in die Öffnung eingeführten Stift ergibt sich somit nicht nur eine Sicherung in axialer Richtung, sondern auch in beide Umfangsrichtungen.

Dabei ist besonders bevorzugt, dass das das zweite Element bei teilweise in die Öffnung eingeführtem Stift gegenüber dem ersten Element verschwenkbar ist, wodurch der Stift weiter in die Öffnung einführbar ist. Durch diese Schwenkbewegung wird die Profilschelle mit dem Vorpositinierer gleichzeitig um den Flansch gelegt. Bei der Montage muss nur zuerst ein freies Ende des Stifts in die Öffnung eingebracht werden und anschließend die Schwenkbewegung durchgeführt werden. In einem Schritt wird so nicht nur die Profilschelle auf dem Flansch vormontiert, sondern auch deren Position mit Hilfe des Vorpositionierers gesichert.

Vorzugsweise weist die Ausnehmung eine Rastverengung auf. Durch diese Rastverengung, also insbesondere eine Verengung der Nut, kann ein unbeabsichtigtes Herausführen des Stiftes aus der Ausnehmung verhindert werden, ohne eine Bewegung in Umfangsrichtung vollständig zu unterbinden. Durch die Rastverengung wirkt die Ausnehmung ähnlich wie eine Halteklammer. Nach Passieren der Rastverengung wird der Stift hingegen im Bereich des geschlossenen Endes der Führungsnut mit einer gewissen Bewegungsfreiheit gehalten, wobei eine begrenzte Beweglichkeit in alle Richtung gegeben ist.

Vorteilhafterweise ist der Stift über eine in Axialrichtung verlaufende Brücke an der Profilschelle festlegbar. Die Brücke greift dabei am radial äußeren Ende des Stifts an. Der Stift kann so gegenüber der Profilschelle axial versetzt sein, so dass auch das erste Element mit einem gewünschten Abstand zum Verbindungsflansch angeordnet werden kann.

In einer bevorzugten Ausgestaltung weist das erste Element einen Fußabschnitt auf, wobei ein vom Fußabschnitt abgewandtes Ende des Halteabschnitts frei ist. Das erste Element kann so in Umfangsrichtung eine relativ kurze Erstreckung aufweisen und somit mit relativ geringem Materialaufwand und damit Gewicht hergestellt werden. Ferner führt das freie Ende des Halteabschnitts zu einer gewissen Elastizität des ersten Elements in Radialrichtung. Das Auftreten von Zwang zwischen dem ersten und dem zweiten Element beim Spannen der Profilschelle wird so vermieden. Gleichzeitig kann diese Elastizität zum einfacheren Montieren der Profilschelle auf dem Flansch genutzt werden.

In einer alternativen Ausgestaltung weist das erste Element zwei Fußabschnitte auf, zwischen denen der Halteabschnitt angeordnet ist. Das erste Element kann dadurch sehr stabil ausgebildet und an zwei Stellen mit dem Leitungsende verbunden werden.

Dabei liegen die Fußabschnitte und der Halteabschnitt bevorzugterweise in Umfangsrichtung nebeneinander. In Axialrichtung nimmt das erste Element dann nur relativ wenig Raum in Anspruch. Gleichzeitig wird in Umfangsrichtung eine relativ hohe Stabilität erhalten, die zum Einführen des Stiftes in die Nut und zur axialen Lagesicherung vorteilhaft ist.

Die eingangs genannte Aufgabe wird durch eine Verbindungsanordnung mit einem Leitungsende und einer Profilschelle, die über einen Vorpositionierer nach einem der Ansprüche 1 bis 12 am Leitungsende gehalten ist, gelöst, wobei ein erstes Element des Vorpositionierers am Leitungsende und ein zweites Element des Vorpositionierers an der Profilschelle befestigt ist.

Mit dem erfindungsgemäßen Vorpositionierer lässt sich durch eine einfache Rotationsbewegung oder Radialbewegung insbesondere in Verbindung mit einer Schwenkbewegung der Profilschelle gegenüber dem Leitungsende eine Verbindung zwischen den beiden Elementen des Vorpositionierers herstellen, indem der Stift in die Ausnehmung eingeführt wird. Der Vorpositionierer ermöglicht dabei eine Kompensation von Lageänderungen und Lageunterschieden in radialer Richtung und gegebenenfalls in Umfangsrichtung. In axialer Richtung wird hingegen eine relativ definierte Position gehalten.

Vorzugsweise ist die Brücke des Vorpositionierers an einer radialen Außenseite eines Schellenbandes der Profilschelle befestigt. Dort steht in der Regel ausreichend Raum zur Verfügung, wobei der Vorpositionierer mit geringem Aufwand am Schellenband befestigt werden kann, beispielsweise durch Verschweißen, Vercrimpen oder Vernieten. Ferner steht der Vorpositionier dadurch einem Kontakt zwischen einer Innenseite des Schellenbandes und den Verbindungsflanschen nicht entgegen.

In einer bevorzugten Ausgestaltung weist der Vorpositionier ein zwei Abschnitte eines Schellenbandes der Profilschelle miteinander verbindendes Verbindungselement auf, von dem die Brücke ausgeht. Dieses Verbindungselement dient bei Profilschellen in der Regel gleichzeitig als Federelement, um die Profilschelle ausreichend weit aufweiten und um die Verbindungsflansche legen zu können. Die Brücke und das Verbindungselement können dabei insbesondere inklusive des Stiftes einstückig aus einem Blechteil oder Ähnlichem hergestellt sein, beispielsweise durch Ausstanzen und anschließendes Umformen. Die Brücke geht dabei insbesondere mittig von einer Längsseite des Verbindungselements aus und erstreckt sich im Wesentlichen rechtwinklig dazu in axialer Richtung, während sich das Verbindungselement in Umfangsrichtung erstreckt. Am von dem Verbindungselement abgewandten Ende der Brücke geht diese in den Stift über, der gegenüber der Brücke um 90° gebogen ist, so dass er sich in radialer Richtung erstreckt. Am seinem radial inneren Ende kann der Stift dann einen oder zwei wieder in axialer Richtung verlaufende Füße aufweisen, die ebenfalls durch entsprechendes Umbiegen erhalten werden können.

Bevorzugterweise entspricht ein radialer Abstand zwischen dem Leitungsende und dem Halteabschnitt betragsweise zumindest einer beim Spannen der Profilschelle auftretenden Durchmesserverringerung. Damit steht für den Stift in radialer Richtung ausreichend Raum zur Verfügung, um auch beim Spannen der Profilschelle nicht in Kontakt mit dem Leitungsende zu gelangen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Profilschelle mit einem Vorpositionierer in einer ersten Ausführungsform in räumlicher Darstellung und
- Fig. 2: ein erstes, bügelförmiges Element des Vorpositionierers,
- Fig. 3: ein zweites Element des Vorpositionierers,
- Fig. 4: eine Profilschelle mit einem Vorpositionierer einer zweiten Ausführungsform und
- Fig. 5: die Profilschelle nach Fig. 4 vor Montage auf einem Flansch.

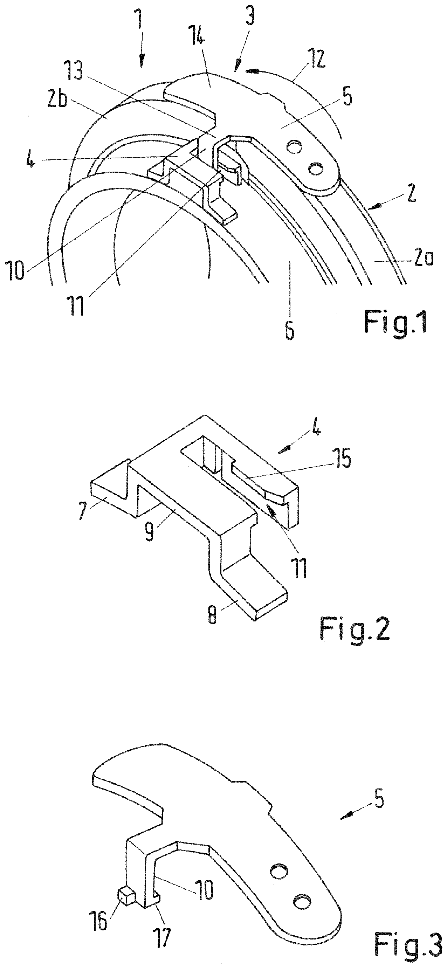

Fig. 1 zeigt eine Profilschelle 1 mit einem Schellenband 2, das zumindest zwei Hälften 2a, 2b umfasst. Die zwei Hälften 2a, 2b des Schellenbands 2 sind über einen Vorpositionierer 3 miteinander verbunden, der ein erstes Element 4 und ein zweites Element 5 aufweist.

Das erste Element 4 ist an einem Leitungsende 6 befestigt, während das zweite Element 5 an der Profilschelle 1 festgelegt ist. Das erste Element 4 weist zwei Fußabschnitte 7, 8 auf, zwischen denen ein Halteabschnitt 9 ausgebildet ist, der gegenüber den Fußabschnitten 7, 8 radial nach außen versetzt ist. Dadurch entsteht zwischen dem Halteabschnitt 9 und dem Leitungsende 6 ein Freiraum, in den ein als Führungsstift ausgebildeter Stift 10 des zweiten Elements 5 eintauchen kann.

Zur Führung des Führungsstifts 10 ist im Halteabschnitt 9 des ersten Elements 4 eine Ausnehmung in Form einer in Umfangsrichtung verlaufende Nut 11 ausgebildet, die an einem umfangsseitigen Ende offen und am gegenüberliegenden Ende geschlossen ausgebildet ist. Dadurch kann der Führungsstift durch eine in Umfangsrichtung gerichtete Montagebewegung zwischen dem ersten Element 4 und dem zweiten Element 5 in die Nut 11 eingebracht werden. Diese Montagebewegung wird durch einen Pfeil 12 symbolisiert.

Das zweite Element 5 umfasst neben dem Führungsstift 10 eine Brücke 13 und ein Verbindungselement 14. Das Verbindungselement 14 erstreckt sich dabei in Umfangsrichtung der Profilschelle und verbindet die beiden Hälften 2a, 2b des Schellenbandes 2 gelenkig miteinander. Dafür ist das Verbindungelement an den Außenseiten des Schellenbandes 2 befestigt, beispielsweise über Punktschweißen oder eine Crimpverbindung.

Die Brücke 13 erstreckt sich in axialer Richtung senkrecht zum Verbindungselement und steht mittig von einer Längsseite des Verbindungselements 14 vor. Dadurch kann der Führungsstift 10, der sich am vom Verbindungselement 14 abgewandten Ende der Brücke 13 befindet, axial beabstandet zur Profilschelle angeordnet werden.

In Fig. 2 ist das erste Element 4 des Vorpositionierers dargestellt. Es ist zu erkennen, dass die Nut 11 an ihrem offenen Ende eine Rastverengung 15 aufweist, die sich zum geschlossenen Ende hin aufweitet. Dort ist die Nut 11 so breit, dass der Führungsstift 11 etwas axiales Spiel hat, um Reibungsverluste und zusätzliche Spannungen beim Spannen der Profilschelle zu vermeiden.

In Fig. 3 ist das zweite Element 5 des Vorpositionierers gezeigt. Das Verbindungselement 14 ist einstückig mit der Brücke 13 und dem Führungsstift 10 aus einem entsprechenden Blech- oder Kunststoffteil geformt. An seinem freien Ende weist der Führungsstift 10 zwei gegensätzlich gerichtete Füße 16, 17 auf, die ein Herausziehen des Führungsstifts 10 aus der Nut 11 in radialer Richtung verhindern und, im Falle eines Anstoßens an das Leitungsende, für einen relativ flächigen Kontakt sorgen. Dadurch wird eine Gefahr einer Beschädigung des Leitungsendes minimiert.

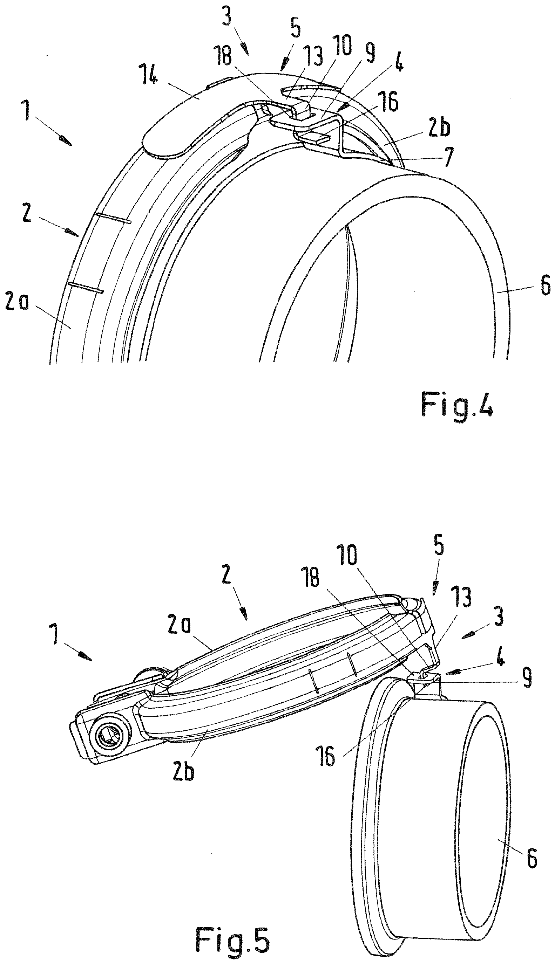

In Fig. 4 ist eine Profilschelle 1 mit einer weiteren bevorzugten Ausgestaltung des Vorpositionierers 3 gezeigt, in der gleiche oder entsprechende Elemente mit den gleichen Bezugszeichen wie bei der Ausführungsform nach den Figuren 1 bis 3 versehen sind.

Dabei ist die Ausnehmung 18 im Halteabschnitt 9 des ersten Elements 4 als Öffnung mit geschlossenen Umfangsrand ausgebildet, in die der Stift 10 des zweiten Elements 5 derart eingeführt ist, dass sich ein umgebogenes Ende 16 des Stifts 10 in axialer Richtung erstreckt und so auch eine Lagesicherung in radialer Richtung bewirkt. Das erste Element 4 ist ferner nur über einen Fußabschnitt 7 am Leitungsende 6 festgelegt, während ein vom Fußabschnitt 7 abgewandtes Ende des Halteabschnitts 9 frei ist. Dies ermöglicht eine gewisse Flexibilität des ersten Elements 4.

In Fig. 5 ist dargestellt, wie die Profilschelle 1 mit dem Vorpositionierer 3 durch Verschwenken gegenüber dem Leitungsende 6 montiert wird. Bei dem in Fig. 5 gezeigten Ausgangszustand ist der Fuß 16 des Stifts 10 bereits in die Öffnung 18 eingeführt. Durch anschließendes Verschwenken wird nicht nur die Profilschelle 1 auf dem Flansch positioniert, sondern auch der Stift 10 weiter in die Öffnung 18 hinein bewegt, bis der Fuß 16 schließlich in axialer Richtung auf einer von der Brücke 13 abgewandten Seite des Halteabschnitts 9 liegt. Somit wird in alle Raumrichtungen eine (spielbehaftete) Lagesicherung erhalten, die in radialer Richtung aber zumindest so viel Spiel hat, dass ein Spannen der Profilschelle 1 mit der damit verbundenen Durchmesserverringerung nicht behindert wird.

Der erfindungsgemäße Vorpositionierer ermöglicht eine sehr einfache Vorpositionierung einer Profilschelle auf Ringflansche, wobei die beiden Elemente des Vorpositionierers entweder nach Anordnung der Profilschelle auf den Flanschen durch eine einfache Rotationsbewegung der Profilschelle oder durch eine Schwenkbewegung der Profilschelle miteinander in Eingriff gebracht werden können. Eine Bewegung in axialer Richtung, die durch die Ringflansche erschwert bzw. behindert würde, ist dafür nicht erforderlich. Durch den vom Leitungsende radial beabstandeten Halteabschnitt ist hingegen eine radiale Relativbewegung über eine ausreichende Distanz problemlos möglich, so dass ein Spannen der Profilschelle nicht behindert wird.

Die Erfindung ist nicht auf eine der vorbeschriebenen Ausführungsformen beschränkt, sondern in vielfältiger Weise abwandelbar.

### Bezugszeichenliste

- 1: Profilschelle
- 2: Schellenband
- 3: Vorpositionierer
- 4: Erstes Element
- 5: Zweites Element
- 6: Leitungsende
- 7: Fußabschnitt
- 8: Fußabschnitt
- 9: Halteabschnitt
- 10: Führungsstift
- 11: Nut
- 12: Pfeil
- 13: Brücke
- 14: Verbindungselement
- 15: Rastverengung
- 16: Fuß
- 17: Fuß
- 18: Öffnung

## Patentansprüche

1. **Vorpositionierer** (3) für eine Profilschelle (1), der zweiteilig mit einem ersten Element (4) und einem zweiten Element (5) ausgebildet ist, wobei das erste Element (4) an einem Leitungsende (6) und das zweite Element (5) an der Profilschelle (1) befestigbar ist, **dadurch gekennzeichnet, dass** das erste Element (4) bügelförmig mit einem am Leitungsende (6) festlegbaren Fußabschnitt (7, 8) und einem gegenüber dem Fußabschnitt (7, 8) radial nach außen versetzten Halteabschnitt (9) ausgebildet ist, der eine Ausnehmung (11, 18) aufweist, wobei das zweite Element (5) einen in Radialrichtung verlaufenden Stift (10) aufweist, der in die Ausnehmung (11, 18) einführbar ist.

2. Vorpositionierer nach Anspruch 1, **dadurch gekennzeichnet, dass** die Ausnehmung (11, 18) als in Umfangsrichtung verlaufende, insbesondere einseitig offene Nut ausgebildet ist.

3. Vorpositionierer nach Anspruch 2, **dadurch gekennzeichnet, dass** der Stift (10) als Führungsstift ausgebildet ist, der in Umfangsrichtung in die Nut (11) einführbar ist.

4. Vorpositionierer nach Anspruch 3, **dadurch gekennzeichnet, dass** der Führungsstift (10) an seinem radial inneren Ende eine Verbreiterung (16, 17) aufweist, die breiter als die Nut (11) ist, wobei die Verbreiterung (16, 17) zwischen den Halteabschnitt (9) und dem Leitungsende (6) einführbar ist.

5. Vorpositionierer nach Anspruch 3 oder 4, **dadurch gekennzeichnet, dass** das zweite Element (5) mit dem in der Nut (11) befindlichen Führungsstift (10) gegenüber dem ersten Element (4) radial bewegbar ist.

6. Vorpositionierer nach Anspruch 1, **dadurch gekennzeichnet, dass** die Ausnehmung als Öffnung (18) mit geschlossenem Umfangsrand ausgebildet ist.

7. Vorpositionierer nach Anspruch 6, **dadurch gekennzeichnet, dass** das zweite Element (5) bei teilweise in die Öffnung (18) eingeführtem Stift (10) gegenüber dem ersten Element (4) verschwenkbar ist, wodurch der Stift (10) weiter in die Öffnung (18) einführbar ist.

8. Vorpositionierer nach einem der vorhergehenden Ansprüche, **dadurch gekennzeichnet, dass** die Ausnehmung (11, 18) eine Rastverengung (15) aufweist.

9. Vorpositionierer nach einem der vorhergehenden Ansprüche, **dadurch gekennzeichnet, dass** der Stift (10) über eine in Axialrichtung verlaufende Brücke (13) an der Profilschelle (1) festlegbar ist.

10. Vorpositionierer nach einem der vorhergehenden Ansprüche, **dadurch gekennzeichnet, dass** das erste Element einen Fußabschnitt (7) aufweist, wobei ein vom Fußabschnitt (7) abgewandtes Ende des Halteabschnitts (9) frei ist.

11. Vorpositionierer nach einem der Ansprüche 1 bis 9, **dadurch gekennzeichnet, dass** das erste Element (4) zwei Fußabschnitte (7, 8) aufweist, zwischen denen der Halteabschnitt (9) angeordnet ist.

12. Vorpositionierer nach Anspruch 11, **dadurch gekennzeichnet, dass** die Fußabschnitte (7, 8) und der Halteabschnitt (9) in Umfangsrichtung nebeneinanderliegen.

13. **Verbindungsanordnung** mit einem Leitungsende (6) und einer Profilschelle (1), die über einen Vorpositionierer (3) nach einem der vorhergehenden Ansprüche am Leitungsende (6) gehalten ist, wobei ein erstes Element (4) des Vorpositionierers (3) am Leitungsende (6) und ein zweites Element (5) des Vorpositionierers (3) an der Profilschelle (1) befestigt ist.

14. Verbindungsanordnung nach Anspruch 13, **dadurch gekennzeichnet, dass** die Brücke (13) des Vorpositionierers (3) an einer radialen Außenseite eines Schellenbandes (2) der Profilschelle (1) befestigt ist.

15. Verbindungsanordnung nach Anspruch 13 oder 14, **dadurch gekennzeichnet, dass** der Vorpositionierer (3) ein zwei Hälften (2a, 2b) eines Schellenbandes (2) der Profilschelle (1) miteinander verbindendes Verbindungselement (14) aufweist, von dem die Brücke (13) ausgeht.

16. Verbindungsanordnung nach einem der Ansprüche 13 bis 15, **dadurch gekennzeichnet, dass** ein radialer Abstand zwischen dem Leitungsende (6) und dem Halteabschnitt (9) betragsweise zumindest einer beim Spannen der Profilschelle (1) auftretenden Durchmesserverringerung entspricht.

## Claims

1. **Pre-positioner** (3) for a profiled clamp (1), which is designed in two parts with a first element (4) and a second element (5), wherein the first element (4) can be secured onto a line end (6) and the second element (5) can be secured onto the profiled clamp (1), **characterised in that** the first element (4) is designed to be bow-shaped with a foot portion (7, 8) which can be fixed onto the line end (6) and a holding portion (9) offset radially outwards relative to the foot portion (7, 8), which holding portion has a recess (11, 18), wherein the second element (5) has a pin (10) running in radial direction which can be inserted into the recess (11, 18).

2. Pre-positioner according to claim 1, **characterised in that** the recess (11, 18) is designed as an groove running in peripheral direction, in particular a groove open on one side.

3. Pre-positioner according to claim 2, **characterised in that** the pin (10) is designed as a guiding pin which can be inserted into the groove (11) in peripheral direction.

4. Pre-positioner according to claim 3, **characterised in that** the guiding pin (10) at its radially inner end has a widened section (16, 17) which is wider than the groove (11), wherein the widened section (16, 17) can be inserted between the holding portion (9) and the line end (6).

5. Pre-positioner according to claim 3 or 4, **characterised in that** the second element (5) can be moved radially relative to the first element (4) with the guiding pin (10) located in the groove (11).

6. Pre-positioner according to claim 1, **characterised in that** the recess is designed as an opening (18) with a closed peripheral edge.

7. Pre-positioner according to claim 6, **characterised in that** the second element (5) with a pin (10) partly inserted into the opening (18) can be pivoted relative to the first element (4), whereby the pin (10) can be inserted further into the opening (18).

8. Pre-positioner according to any of the preceding claims, **characterised in that** the recess (11, 18) has a narrowed locking part (15).

9. Pre-positioner according to any of the preceding claims, **characterised in that** the pin (10) can be secured onto the profiled clamp (1) by a bridge (13) running in axial direction.

10. Pre-positioner according to any of the preceding claims, **characterised in that** the first element has a foot portion (7), wherein an end of the holding portion (9) facing away from the foot portion (7) is free.

11. Pre-positioner according to any of claims 1 to 9, **characterised in that** the first element (4) has two foot portions (7, 8) between which the holding portion (9) is arranged.

12. Pre-positioner according to claim 11, **characterised in that** the foot portions (7, 8) and the holding portion (9) are next to one another in peripheral direction.

13. **Connecting arrangement** with a line end (6) and a profiled clamp (1), which is held on the line end (6) by a pre-positioner (3) according to any of the preceding claims, wherein a first element (4) of the pre-positioner (3) is secured onto the line end (6) and a second element (5) of the pre-positioner (3) is secured onto the profiled clamp (1).

14. Connecting arrangement according to claim 13, **characterised in that** the bridge (13) of the pre-positioner (3) is secured onto a radial outer side of a clamp strip (2) of the profiled clamp (1).

15. Connecting arrangement according to claim 13 or 14, **characterised in that** the pre-positioner (3) has a connecting element (14) connecting together two halves (2a, 2b) of a clamp strip (2) of the profiled clamp (1), from which connecting element the bridge (13) extends.

16. Connecting arrangement according to any of claims 13 to 15, **characterised in that** a radial distance between the line end (6) and the holding portion (9) corresponds in size at least to a reduction in diameter occurring when tensioning the profiled clamp (1).

## Revendications

1. **Dispositif de pré-positionnement** (3) pour une bride profilée (1), qui est réalisée en deux parties avec un premier élément (4) et un deuxième élément (5), dans lequel le premier élément (4) peut être fixé au niveau d'une extrémité de câble (6) et le deuxième élément (5) peut être fixé au niveau de la bride profilée (1),
**caractérisé en ce que** le premier élément (4) est réalisé en forme d'étrier avec une section de pied (7, 8) pouvant être définie au niveau de l'extrémité de câble (6) et une section de retenue (9) décalée radialement vers l'extérieur par rapport à la section de pied (7, 8), qui présente un évidement (11, 18), dans lequel le deuxième élément (5) présente une tige (10) s'étendant dans la direction radiale, qui peut être introduite dans l'évidement (11, 18).

2. Dispositif de pré-positionnement selon la revendication 1, **caractérisé en ce que** l'évidement (11, 18) est réalisé en tant que rainure ouverte en particulier unilatéralement, s'étendant dans la direction circonférentielle.

3. Dispositif de pré-positionnement selon la revendication 2, **caractérisé en ce que** la tige (10) est réalisée en tant que tige de guidage, qui peut être introduite dans la rainure (11) dans la direction circonférentielle.

4. Dispositif de pré-positionnement selon la revendication 3, **caractérisé en ce que** la tige de guidage (10) présente au niveau de son extrémité radialement intérieure un élargissement (16, 17) qui est plus large que la rainure (11), dans lequel l'élargissement (16, 17) peut être introduit entre la section de retenue (9) et l'extrémité de câble (6).

5. Dispositif de pré-positionnement selon la revendication 3 ou 4, **caractérisé en ce que** le deuxième élément (5) est radialement mobile par rapport au premier élément (4) avec la tige de guidage (10) se trouvant dans la rainure (11).

6. Dispositif de pré-positionnement selon la revendication 1, **caractérisé en ce que** l'évidement est réalisé en tant qu'ouverture (18) avec bord circonférentiel fermé.

7. Dispositif de pré-positionnement selon la revendication 6, **caractérisé en ce que** le deuxième élément (5) peut être basculé par rapport au premier élément (4) lorsque la tige (10) est introduite en partie dans l'ouverture (18), moyennant quoi la tige (10) peut être introduite en outre dans l'ouverture (18).

8. Dispositif de pré-positionnement selon l'une quelconque des revendications précédentes, **caractérisé en ce que** l'évidement (11, 18) présente un rétrécissement d'encliquetage (15).

9. Dispositif de pré-positionnement selon l'une quelconque des revendications précédentes, **caractérisé en ce que** la tige (10) peut être fixée au niveau de la bride profilée (1) par le biais d'un pont (13) s'étendant dans la direction axiale.

10. Dispositif de pré-positionnement selon l'une quelconque des revendications précédentes, **caractérisé en ce que** le premier élément présente une section de pied (7), dans lequel une extrémité opposée à la section de pied (7) de la section de retenue (9) est libre.

11. Dispositif de pré-positionnement selon l'une quelconque des revendications 1 à 9, **caractérisé en ce que** le premier élément (4) présente deux sections de pied (7, 8), entre lesquelles la section de retenue (9) est agencée.

12. Dispositif de pré-positionnement selon la revendication 11, **caractérisé en ce que** les sections de pied (7, 8) et la section de retenue (9) sont côte à côte dans la direction circonférentielle.

13. **Ensemble de liaison** avec une extrémité de câble (6) et une bride profilée (1), qui est retenue au niveau de l'extrémité de câble (6) par le biais d'un dispositif de pré-positionnement selon l'une quelconque des revendications précédentes, dans lequel un premier élément (4) du dispositif de pré-positionnement (3) est fixé au niveau de l'extrémité de câble (6) et un deuxième élément (5) du dispositif de pré-positionnement (3) est fixé au niveau de la bride profilée (1).

14. Ensemble de liaison selon la revendication 13, **caractérisé en ce que** le pont (13) du dispositif de pré-positionnement (3) est fixé au niveau d'un côté extérieur radial d'une bande de bride (2) de la bride profilée (1).

15. Ensemble de liaison selon la revendication 13 ou 14, **caractérisé en ce que** le dispositif de pré-positionnement (3) présente un élément de liaison (14) reliant l'une à l'autre deux moitiés (2a, 2b) d'une brande de bride (2) de la bride profilée (1), duquel part le pont (13).

16. Ensemble de liaison selon l'une quelconque des revendications 13 à 15, **caractérisé en ce qu'**une distance radiale entre l'extrémité de câble (6) et la section de retenue (6) correspond au moins en valeur à une diminution de diamètre apparaissant lors du serrage de la bride profilée (1).
